# EUROPEAN PATENT APPLICATION

(11) **EP 2 410 776 A1**
(43) Date of publication of application: **25.01.2012**
(21) Application number: 09841858.5
(22) Date of filing: 18.03.2009
(51) Int. Cl.: H04W 8/18, H04W 36/14

(54) **BASE STATION, COMMUNICATION DEVICE, RELAY METHOD, AND COMMUNICATION METHOD**

(71) Applicant: Fujitsu Limited, Kawasaki-shi, Kanagawa 211-8588 (JP)
(72) Inventor: SATO, Izuru, Kawasaki-shi Kanagawa 211-8588 (JP)
(74) Representative: Stebbing, Timothy Charles
(86) International application number: PCT/JP2009/055308
(87) International publication number: WO 2010/106653

(57) **Abstract**

A correspondence information storage device (330) stores correspondence information that correlates a first address that is assigned to UE (105), in an operator network (103) that is coupled to an internet (101), and a second address that is assigned to the UE (105) in a cell of femtocell. A LAN interface (310) receives from the internet (101), a packet having the second address as a destination. Based on the correspondence information stored in the correspondence information storage device (330), an address converting unit (121) converts the destination of the packet received by the LAN interface (310), from the second address to the first address. If the UE (105) has performed handover to another femtocell (120) in the operator network (103), a transfer control unit (320) transmits to the operator network (103), the packet of which the destination has been converted by the address converting unit (121).

## Description

### TECHNICAL FIELD

The present invention relates to a base station, communications apparatus, a relay method, and a communication method that perform mobile terminal handover.

### BACKGROUND ART

Femtocells, which are installed indoors and wirelessly communicate with nearby mobile terminals have been under investigation. Femtocells, for example, relay communication between a mobile station and a mobile communications network. The development of femtocell standards is underway in the 3rd Generation Partnership Project (3GPP), in which femtocells are referred to as Home NodeB or Home eNodeB.

In conventional mobile networks, packets are routed to the UE by tunneling such as under the GPRS Tunneling Protocol (GTP) through Packet Data Network GateWays (PDN-GW) under Service Architecture Evolution/Long Term Evolution (SAE/LTE) which serves as anchor points of user equipment (UE), i.e., mobile terminal, on an IP network. Further, in 3GPP, Gateway GPRS Support Nodes (GGSN) serve as anchors.

Under SAE/LTE, when user data is sent from the internet to UE, the path includes sequentially, a PDN-GW, a Serving-GateWay (S-GW), an eNodeB, and the UE. Conversely, when packets from UE are sent to the internet, the path includes sequentially, the UE, an eNodeB, an S-GW, and a PDN-GW.

From an indoor local area network (LAN), femtocells use access lines such as an Asymmetric Digital Subscriber Line (ADSL) and a fiber to the home (FTTH) line, and are connected to devices on an operator core network.

According to current 3GPP standards, femtocells use IPsec tunnels and are connected to an operator network; and S-GWs are connected by an S1 interface, similar to a macro base station. Since femtocells are connected to an operator network through ADSL, FTTH, etc., when UE is in the cell of a femtocell, the load on the operator network nodes is lightened, if the UE directly communicates packets with the internet, without passing through operator network nodes.

Femtocell configuration having such a function has been proposed. For example, conventionally, the function of a gateway device to the internet and having a PDN-GW has been provided to a femtocell. In such a configuration, since the IP address of a mobile terminal changes when the mobile terminal performs handover from the femtocell to the operator network, communication between the mobile terminal and the internet is interrupted.

Mobile IP (MIP) (see, for example, Patent Document 1) is a technique for continuing communication before and after handover in which the connection point to the internet changes. Under MIP, a node called a home agent is used as an anchor and a header for packet transferring is appended to packets received at the home agent. The packets are encapsulated and transferred to the handover destination, enabling communication to continue.

[Patent Document 1] Japanese Laid-Open Patent Publication No. 2005-530456

### DISCLOSURE OF INVENTION

### PROBLEM TO BE SOLVED BY THE INVENTION

However, with the conventional technique above, a problem arises in that since the packets are encapsulated at the time of transfer, overhead occurs, increasing the amount of information. In particular, for packets having a small payload such as Real-time Transport Protocol (RTP) packets in Voice over IP (VoIP), a header for transferring the packets is added to the packets, whereby the amount of information drastically increases. Consequently, a problem arises in that utilization efficiency of band in a communication interval for packet transfer drops.

An object of the disclosed base station, communications apparatus, relay method, and communication method is to solve the problems above and reduce the amount of transfer packet information.

### MEANS FOR SOLVING PROBLEM

To solve the problems above and achieve an object, a base station that relays communication between a wide area communications network and a mobile terminal in a nearby wireless area, includes a storage device that stores therein correspondence information that correlates a first address and a second address that are assigned to the mobile terminal, the first address being assigned in a mobile communications network coupled to the wide area communications network and the second address being assigned in the wireless area; a receiving unit that receives from the wide area communications network, a packet having the second address set as a destination; a converting unit that based on the correspondence information, converts the destination of the received packet, from the second address to the first address; and a transferring unit that transfers to the mobile communications network, the packet of which the destination has been converted, if the mobile terminal has performed handover to a second base station in the mobile communications network.

According to the configuration above, the wide area communications network uses the second address as the address of the mobile terminal when communicating with the mobile terminal, enabling communication to continue even if the mobile terminal performs handover. Further, the mobile terminal uses the first address as the address of the mobile terminal, whereby even if the mobile terminal performs handover to another base station communication can continue. Moreover, packet transfer by conversion of the packet address, enables the amount of transfer packet information to be reduced.

### EFFECT OF THE INVENTION

The disclosed base station, communications apparatus, relay method, and communication method can reduce transfer packet information.

### BRIEF DESCRIPTION OF DRAWINGS

FIG. 1 is a block diagram of a communications system according to an embodiment (part 1);
FIG. 2 is a block diagram of the communications system according to the embodiment (part 2);
FIG. 3 is a block diagram of an example of a configuration of a femtocell;
FIG. 4 depicts an example of correspondence information stored by the femtocell;
FIG. 5 depicts an example of position information stored by the femtocell;
FIG. 6 is a flowchart of an example of femtocell operation when DL packets are received;
FIG. 7 is a flowchart of an example of femtocell operation when UL packets are received;
FIG. 8 is a block diagram of an example of a configuration of an operator network;
FIG. 9 depicts an example of the correspondence information stored by the communications apparatus;
FIG. 10 depicts an example of session information stored by the communications apparatus;
FIG. 11 is a flowchart of an example of operator network operation when DL packets are received;
FIG. 12 is a flowchart of operator network when UL packets are received;
FIG. 13 is a sequence diagram of an example of an attach sequence of the communications system; and
FIG. 14 is a sequence diagram of an example of a handover sequence of the communications system.

### EXPLANATIONS OF LETTERS OR NUMERALS

100 communications system
101 internet
102 LAN
103 operator network
105 UE
110 web server
120 femtocell
121 address converting unit
122 gateway function unit
123 eNodeB function unit
131 address converting device
132 gateway device
133 macro base station
310 LAN interface
320 transfer control unit
330, 812 correspondence information storage device
340 position information storage device
400, 500, 900, 1000 table
810 communications apparatus
811 communications interface
813 session information storage unit
820 position management apparatus

### BEST MODE(S) FOR CARRYING OUT THE INVENTION

With reference to the accompanying drawings, preferred embodiments of a base station, a communications apparatus, a relay method, and a communication method will be described. The base station, the communications apparatus, the relay method and the communication method convert the addresses of packets transmitted and received by a mobile terminal that has performed handover from a femtocell to a mobile communications network, to transfer the packets and thereby, reduce the amount of packet information.

### (Embodiment)

### (Configuration of communications system before handover)

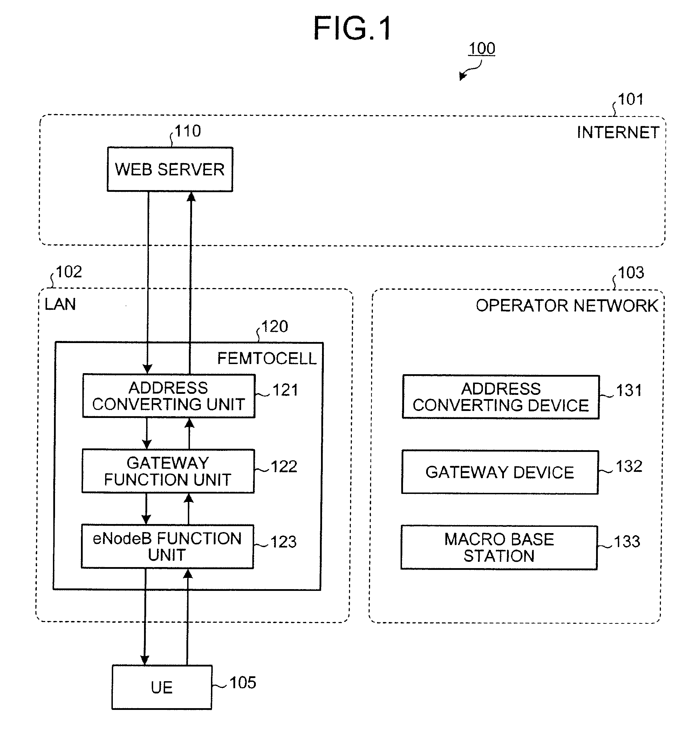

FIG. 1 is a block diagram of a communications system according to an embodiment (part 1). As depicted in FIG. 1, a communications system 100 according to the embodiment includes an internet 101, a LAN 102, and an operator network 103. The internet 101 is a wide area communications network that includes a web server 110. In place of the internet 101, another network may be used as the wide area network.

The LAN 102 is a local communications network connected to the internet 101. The LAN 102 includes a femtocell 120. The operator network 103 is a mobile communications network connected to the internet 101 and includes an address converting device 131, a gateway device 132, and a macro base station 133.

The femtocell 120 on the LAN 102 includes an address converting unit 121, a gateway function unit 122, and an eNodeB function unit 123. The femtocell 120 relays communication between the internet 101 and a mobile terminal in the cell of the femtocell 120, formed nearby. For example, the femtocell 120 communicates wirelessly with UE 105 in an enclosed environment built by the LAN 102 and relays communication between the UE 105 and the internet 101.

A base station of another format may be used in place of the femtocell 120 as base station that relays communication between the mobile terminal in a surrounding wireless area and the wide area communications network. The UE 105 has a first address that is assigned in the operator network 103 and a second address that is assigned in the cell of the femtocell 120 (or the LAN 102).

### (Processing related to downlink of femtocell)

Next, processing performed by the femtocell 120 and related to downlink (DL) packets that are transmitted from the web server 110 to the UE 105 will be described. DL packets transmitted from the web server 110 are input to the address converting unit 121.

The DL destination (e.g., the DST field of the header) of transmissions from the web server 110 is the second address of the UE 105. The address converting unit 121 converts the destination of input packets, from the second address to the first address and outputs the DL packets to the gateway function unit 122.

The gateway function unit 122 encapsulates according to the protocol of the communication between the femtocell 120 and the UE 105 (e.g., 3GPP compliant communication), communication between the femtocell 120 and the internet 101 (e.g., IP communication). For example, the gateway function unit 122 stores to 3GPP protocol payload, DL packets output from the address converting unit 121 and outputs the stored DL packets to the eNodeB function unit 123.

The eNodeB function unit 123, for example, is a functional unit corresponding to a 3GPP Home eNodeB. The eNodeB function unit 123 wirelessly transmits to the UE 105, DL packets output from the gateway function unit 122. The DL packets wirelessly transmitted from the eNodeB function unit 123 are wirelessly received by the UE 105.

Consequent to the configuration above, the web server 110 on the internet 101, by transmitting to the femtocell 120, the DL packets that are addressed to the second address of the UE 105, can cause the DL packets to be received by the UE 105. Further, the UE 105 can receive the DL packets that are transmitted from the web server 110 and addressed to the first address.

### (Processing related to uplink of femtocell)

Next, processing performed by the femtocell 120 and related to uplink (UL) packets that are transmitted from the UE 105 to the web server 110 will be described. The eNodeB function unit 123 wirelessly receives from the UE 105, UL packets that are addressed to the web server 110 and outputs the received UL packets to the gateway function unit 122.

The transmission source (e.g., the SRC field of the header) of the UL packets wirelessly transmitted from the UE 105 and wirelessly received by the eNodeB function unit 123 is the first address of the UE 105. The gateway function unit 122 encapsulates the UL packets output from the eNodeB function unit 123 and outputs the encapsulated packets to the address converting unit 121.

The address converting unit 121 converts the transmission source of the UL packets that are output from the gateway function unit 122, from the first address to the second address and then transmits the UL packets to the web server 110 on the internet 101.

Consequent to the configuration above, the web server 110 can receive UL packets that are output from the UE 105 and have the second address as the transmission source. Further, the UE 105, by transmitting to the femtocell 120, UL packets having the first address as the transmission source, can cause the UL packets to have the second address as the transmission source and to be received by the web server 110.

Therefore, the web server 110 recognizes the first address of the UE 105 as the address of the UE 105, whereby the transmission of DL packets to the UE 105 and the reception of UL packets from the UE 105 can be performed. On the other hand, the UE 105 recognizes the second address of the UE 105 as the address of the UE 105, whereby the reception of DL packets from the web server 110 and the transmission of UL packets to the web server 110 can be performed.

### (Configuration of communications system after handover)

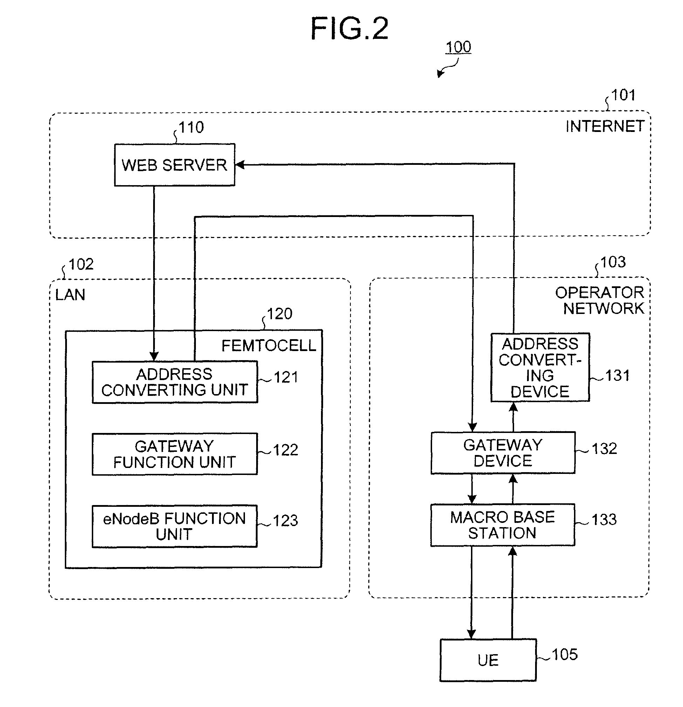

FIG. 2 is a block diagram of the communications system according to the embodiment (part 2). In FIG. 2, components identical to those depicted in FIG. 1 are given the same reference numerals used in FIG. 1 and description there of is omitted. FIG. 2 depicts a state where the UE 105 has been handed over from the cell of the femtocell 120 to the macro base station 133 in the operator network 103, in the communications system 100 depicted in FIG. 1, for example, when the UE 105 is moved outdoors.

### (Processing related to downlink of operator network)

Next, processing performed by the operator network 103 and related to DL packets that are transmitted from the web server 110 to the UE 105 will be described. When the UE 105 performs handover to the macro base station 133, the DL packets whose destination has been converted to the first address by the address converting unit 121 are transmitted to the internet 101.

Since the first address is the address assigned in the operator network 103, DL packets transferred to the internet 101 are transferred to the operator network 103 by a path switching device on the internet 101.

The DL packets transferred from the internet 101 are input to the gateway device 132. The gateway device 132 encapsulates and decapsulates communication between the operator network 103 and the internet 101 (e.g., IP communication) and communication between the operator network 103 and the UE 105 (e.g., 3GPP compliant communication). For example, the gateway function unit 122 encapsulates the input DL packets and transmits the encapsulated DL packets to the macro base station 133.

The macro base station 133 wirelessly transmits to the UE 105, the DL packets transmitted from the gateway device 132. The DL packets transmitted from the macro base station 133 are wirelessly received by the UE 105.

Consequent to the configuration above, even after the UE 105 performs handover to the macro base station 133, the web server 110, by transmitting to the femtocell 120, the DL packets addressed to the second address of the UE 105, can cause the DL packets to be received by the UE 105. Furthermore, even after handover to the macro base station 133, the UE 105 can receive DL packets addressed to the first address of the UE 105.

### (Processing related to uplink of operator network)

Next, processing performed by the operator network 103 and related to UL packets transmitted from the UE 105 to the web server 110 will be described. The macro base station 133 wirelessly receives UL packets that are from the UE 105 and addressed to the web server 110.

The transmission source of the UL packets that are wirelessly transmitted from the UE 105 and wirelessly received by the macro base station 133 is the first address of the UE 105. The macro base station 133 transmits the received UL packets to the gateway device 132. The gateway function unit 122 decapsulates the UL packet transmitted from the macro base station 133 and transmits the decapsulated UL packets to the address converting device 131.

The address converting device 131 converts the transmission source of the UL packets transmitted from the gateway device 132, from the first address to the second address and transmits the UL packets to the web server 110 on the internet 101.

Consequent to the configuration above, even after the UE 105 performs handover to the macro base station 133, the web server 110 on the internet 101 can receive the UL packets addressed to the second address of the UE 105. Further, the UE 105, by transmitting to the macro base station 133, UL packets having the first address as the transmission source, can cause the UL packets to have the second address as the transmission source and to be received by the web server 110.

Therefore, the web server 110 recognizes the first address of the UE 105 as the address of the UE 105, whereby the transmission of DL packets to the UE 105 and the reception of UL packets from the UE 105 can be performed. On the other hand, the UE 105 recognizes the second address of the UE 105 as the address of the UE 105, whereby the reception of DL packets from the web server 110 and the transmission of UL packet to the web server 110 can be performed.

As depicted in FIGS. 1 and 2, whether the UE 105 is in the cell of the femtocell 120 or has performed handover to the macro base station 133, in either case, the web server 110 can use the second address to communicate with the UE 105.

Meanwhile, whether the UE 105 is in the cell of the femtocell 120 or has performed handover to the macro base station 133, in either case, the UE 105 can use the first address to communicate with the web server 110. Consequently, even if the UE 105 performs handover from the femtocell 120 to the macro base station 133, communication between the UE 105 and the web server 110 can be continued.

### (Detailed configuration of femtocell)

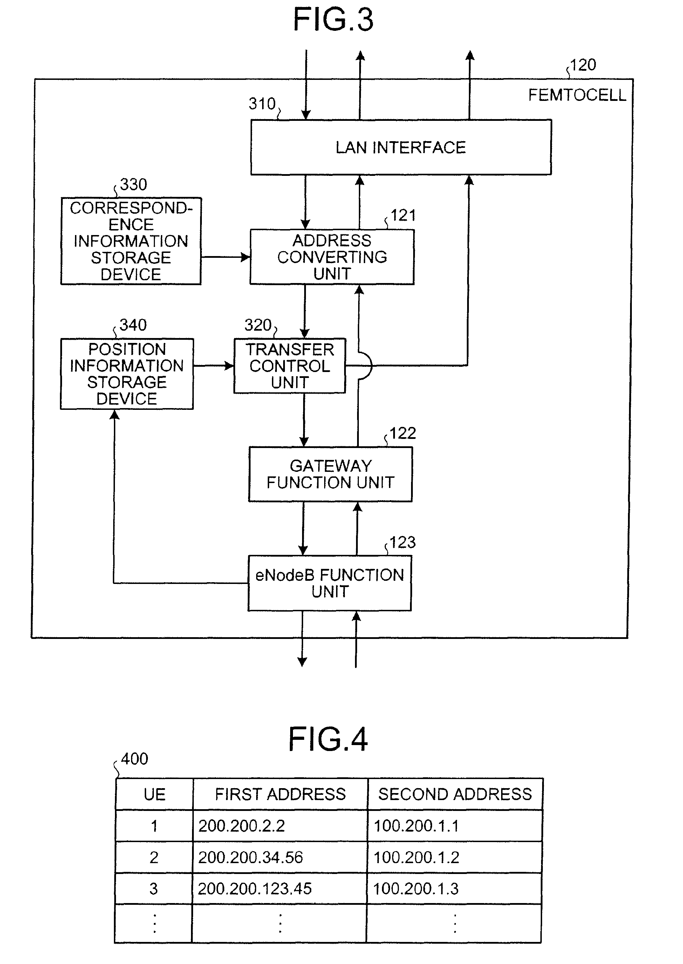

FIG. 3 is a block diagram of an example of a configuration of the femtocell. In FIG. 3, components identical to those depicted in FIG. 1 are given the same reference numerals used in FIG. 1 and description thereof is omitted. As depicted in FIG. 3, the femtocell 120 includes the address converting unit 121, the gateway function unit 122, the eNodeB function unit 123, a LAN interface 310, a transfer control unit 320, a correspondence information storage device 330, and a position information storage device 340.

The LAN interface 310 is a communications interface with the LAN 102. For example, the LAN interface 310 receives DL packets transmitted from the web server 110, via the LAN 102. The LAN interface 310 outputs the received DL packets to the address converting unit 121.

Further, the LAN interface 310 transmits to the web server 110, via the LAN 102, UL packets that are output from the address converting unit 121. The LAN interface 310 transfers to the internet 101, via the LAN 102, DL packets output from the transfer control unit 320.

The correspondence information storage device 330 stores correspondence information that correlates the first address assigned to the UE 105, in the operator network 103 and the second address assigned to the UE 105, in the femtocell 120. The position information storage device 340 stores position information indicating whether the UE 105 is in the cell of the femtocell 120 or has performed handover to the macro base station 133.

The address converting unit 121 reads out the correspondence information from the correspondence information storage device 330 and based on the correspondence information, converts the destination of the DL packets output from the LAN interface 310, from the second address to the first address. The address converting unit 121 then outputs the DL packets to the transfer control unit 320.

Based on the correspondence information readout from the correspondence information storage device 330, the address converting unit 121 further converts the destination of UL packets output from the gateway function unit 122, from the first address to the second address. The address converting unit 121 then outputs the UL packets to the LAN interface 310.

The transfer control unit 320 reads out the position information from the position information storage device 340 and based on the position information, determines whether the UE 105 is in the cell of the femtocell 120 or has performed handover to the macro base station 133.

If the UE 105 is determined to be in the cell of the femtocell 120, the transfer control unit 320 outputs to the gateway function unit 122, the DL packets output from the address converting unit 121, whereby the DL packets are transmitted to the UE 105 via the gateway function unit 122 and the eNodeB function unit 123.

If the UE 105 is determined to have performed handover to the macro base station 133 on the operator network 103, the transfer control unit 320 outputs to the LAN interface 310, the DL packets output from the address converting unit 121, whereby the DL packets are transferred to the operator network 103 via the internet 101.

The gateway function unit 122 encapsulates the DL packets output from the transfer control unit 320 and outputs the encapsulated DL packets to the eNodeB function unit 123. The gateway function unit 122 decapsulates the DL packets output from the eNodeB function unit 123 and outputs the decapsulated UL packets to the address converting unit 121.

The eNodeB function unit 123 performs the wireless transmission of DL packets and the wireless reception of UL packets in addition to monitoring the position of the UE 105 in the cell of the femtocell 120. The eNodeB function unit 123 stores the monitoring results for the UE 105 to the position information storage device 340. If the UE 105 performs handover to the macro base station 133, the eNodeB function unit 123 notifies the operator network 103, via the LAN interface 310, of the second address assigned to the UE 105.

In the configuration above, the LAN interface 310 (receiving unit) stores received packets to memory (not depicted). The address converting unit 121 (converting unit) is implemented by a computing device such as a central processing unit (CPU). The address converting unit 121 reads out the packets stored to the memory by the LAN interface 310, converts the destination of the packets to the first address, and then stores the packets to the memory. The transfer control unit 320 (transferring unit) reads out the packets stored to the memory by the address converting unit 121 and transfers the packets.

The eNodeB function unit 123 (wireless receiving unit) stores wirelessly received packets to the memory. The address converting unit 121 (converting unit) reads out the packets stored to the memory by the eNodeB function unit 123, converts the destination of the packets to the second address, and then stores the packets to the memory. The LAN interface 310 (transmitting unit) reads out the packets stored to the memory by the address converting unit 121 and transmits the packets.

FIG. 4 depicts an example of the correspondence information stored by the femtocell. In the correspondence information storage device 330 depicted in FIG. 3, for example, a table 400 depicted in FIG. 4 is stored as the correspondence information correlating the first address and the second address. In the table 400, a first address and a second address are correlated for each UE (1, 2, 3, ...).

For example, if the destination of DL packets transmitted from the web server 110 is a second address "100.200.1.1", the address converting unit 121 of the femtocell 120 converts the destination of the DL packets to the corresponding first address "200.200.2.2".

Further, if the destination of UL packets transmitted from the UE 105 is the first address "200.200.34.56", the address converting unit 121 converts the destination of the UL packets to the corresponding second address "100.200.1.2".

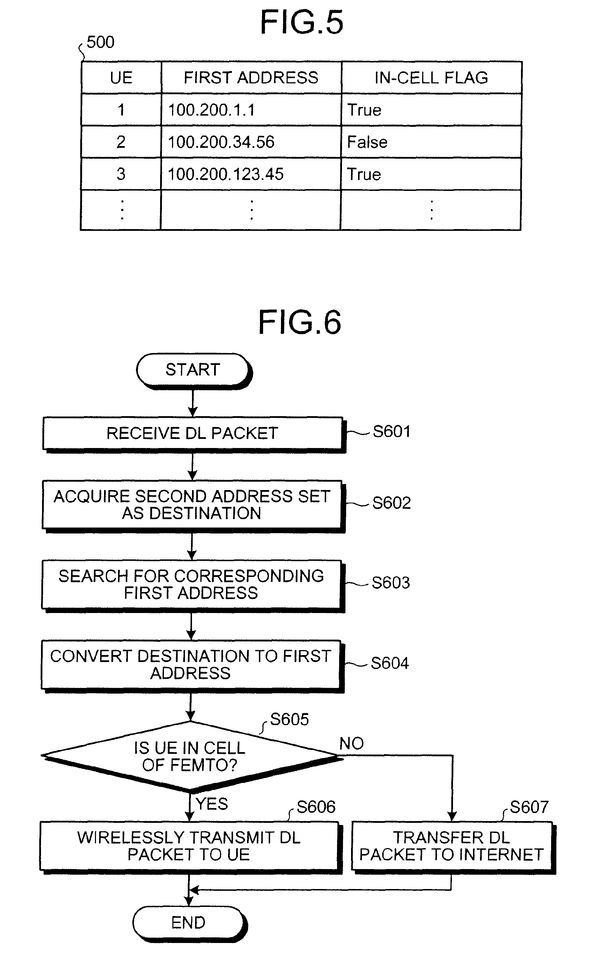

FIG. 5 depicts an example of the position information stored by the femtocell. In the position information storage device 340 depicted in FIG. 3, for example, a table 500 depicted in FIG. 5 is stored as the position information. In the table 500, a first address and an in-cell flag is correlated with each UE (1, 2, 3, ...). The in-cell flag indicates whether the UE 105 is in the cell of the femtocell 120.

For example, if UE 105 is in the cell of the femtocell 120, the corresponding in-cell flag is set to "True" by the eNodeB function unit 123. If the UE 105 has performed handover to the macro base station 133, the corresponding in-cell flag is set to "False" by the eNodeB function unit 123.

If the in-cell flag corresponding to the first address set as the destination of a DL packet output from the address converting unit 121 is "True", the transfer control unit 320 outputs the DL packet to the gateway function unit 122, whereby the DL packet is wirelessly transmitted to the UE 105 in the cell of the femtocell 120.

If the in-cell flag corresponding to the first address set as the destination of a DL packet output from the address converting unit 121 is "False", the transfer control unit 320 transfers the DL packet, via the LAN interface 310 to the internet 101, whereby the DL packet is transferred to the UE 105 that has performed handover to the macro base station 133.

### (Femtocell operation)

FIG. 6 is a flowchart of an example of femtocell operation when DL packets are received. The LAN interface 310 receives a DL packet that is transmitted from the web server 110 and that has the second address set as a destination (step S601). The address converting unit 12 acquires the second address set as the destination of the DL packet received at step S601 (step S602).

The address converting unit 121 searches the correspondence information stored in the correspondence information storage device 330, for the first address that corresponds to the second address acquired step S602 (step S603). The address converting unit 121 converts the destination of the DL packet received at step S601, to the first address retrieved at step S603 (step S604).

The transfer control unit 320 refers to the position information stored in the position information storage device 340 and determines whether the UE 105 corresponding to the first address retrieved at step S603 is in the cell of the femtocell 120 (step S605). If the UE 105 is in the cell (step S605: YES), the eNodeB function unit 123 wirelessly transmits to the UE 105, the DL packet whose destination has been converted at step S604 (step S606).

At step S605, if the UE 105 is not in the cell (step S605: NO), the transfer control unit 320 transfers to the internet 101, the DL packet whose destination has been converted at step S604 (step S607). With the reception of the DL packet, a series of the operations ends.

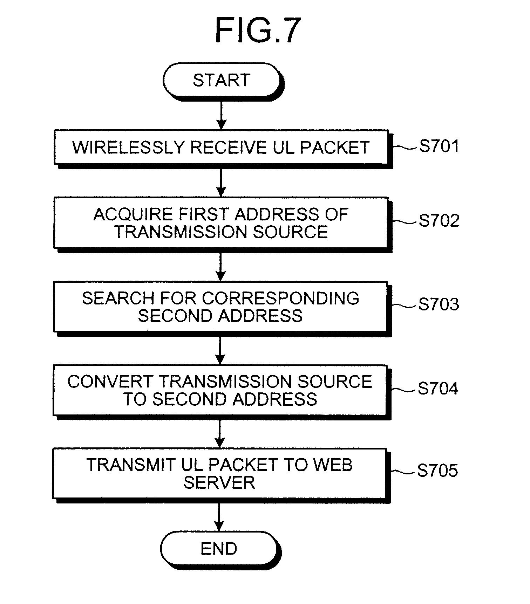

FIG. 7 is a flowchart of an example of femtocell operation when UL packets are received. The eNodeB function unit 123 wirelessly receives a UL packet that is wirelessly transmitted from the UE 105 and whose transmission source is the first address (step S701) The address converting unit 121 acquires the first address of the transmission source of the UL packet received at step S701 (step S702).

The address converting unit 121 searches the correspondence information stored in correspondence information storage device 330, for the second address that corresponds to the first address acquired at step S702 (step S703). The address converting unit 121 converts the transmission source of the UL packet received at step S701, to the second address retrieved at step S703 (step S704).

The LAN interface 310 transmits to the web server 110, the UL packet whose transmission source has been converted at step S70 (step S705). With the reception of the UL packet, a series of the operations ends.

### (Detailed configuration of operator network)

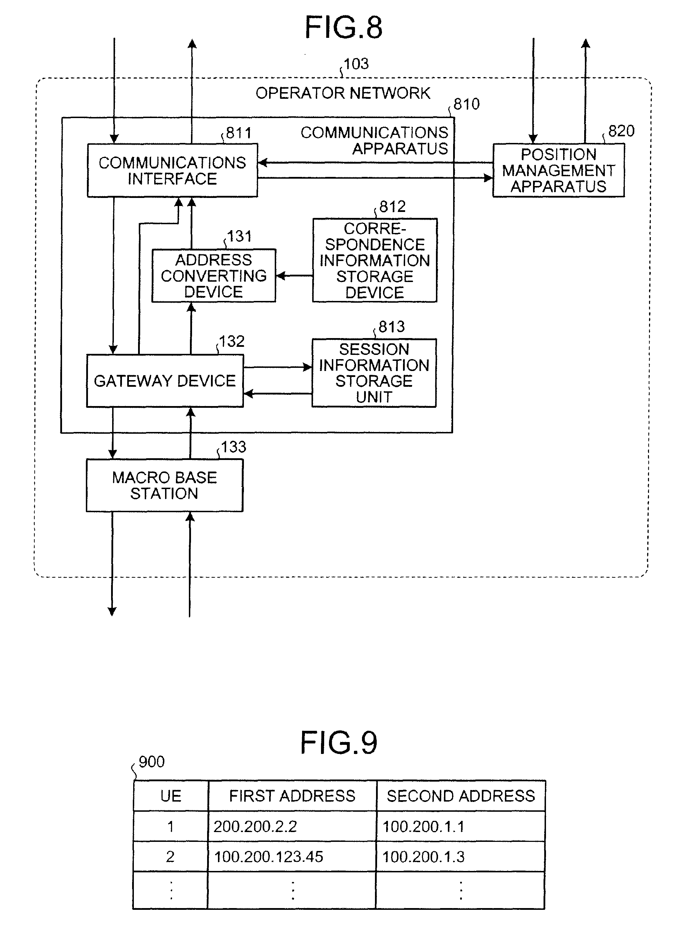

FIG. 8 is a block diagram of an example of a configuration of the operator network. In FIG. 8, components identical to those depicted in FIG. 2 are given the same reference numerals used in FIG. 2 and description thereof is omitted. As depicted in FIG. 8, the operator network 103 includes a communications apparatus 810, the macro base station 133, and a position management apparatus 820. The communications apparatus 810 includes a communications interface 811, a correspondence information storage device 812, a session information storage unit 813, the address converting device 131, and the gateway device 132.

The communications interface 811 is a communications interface with the internet 101. The communications interface 811 receives DL packets transferred from the femtocell 120 via the internet 101, and outputs the received DL packets to the gateway device 132. The communications interface 811 transmits to the web server 110, UL packets that are output from the address converting device 131 or from the gateway device 132.

The session information storage unit 813 stores the session state of the UE 105. The gateway device 132 performs protocol conversion of DL packets output from the communications interface 811 and then transmits the DL packets to the macro base station 133. The gateway device 132 performs protocol conversion of UL packets transmitted from the macro base station 133 and then output the UL packets to the address converting device 131.

The gateway device 132, based on DL packets and UL packets passing through the gateway device 132, monitors the session state of the UE 105 and stores monitoring results to the session information storage unit 813. The gateway device 132 reads out the session information stored in the session information storage unit 813 and based on the session information, detects completion of a session between the web server 110 and the UE 105 via the femtocell 120.

Upon detecting completion of the UE 105 session, the gateway device 132 bypasses the address converting device 131 and outputs UL packets subjected to protocol conversion, to the communications interface 811. As a result, after completion of the session between the web server 110 and the UE 105 via the femtocell 120, the UL packets from the UE 105 are transmitted to the web server 110 without being subject to address conversion.

The position management apparatus 820 is a mobility management entity (MME) that manages position registration of the UE 105. The position management apparatus 820 is connected to the internet 101 and to the communications interface 811 of the communications apparatus 810.

FIG. 9 depicts an example of the correspondence information stored by the communications apparatus. In the correspondence information storage device 812 depicted in FIG. 8, for example, a table 900 depicted in FIG. 9 is stored as the correspondence information correlating first addresses and second addresses. In the table 900, a first address and a second address is correlated for each UE (1, 2, ...).

For example, if the transmission source of UL packets transmitted from the UE 105 is a first address "200.200.2.2", the address converting device 131 converts the transmission source of the UL packets to the corresponding second address "100.200.1.1".

Further, if the transmission source of UL packets transmitted from the UE 105 is a first address "100.200.1.1", the address converting device 131 converts the transmission source of the UL packets to the corresponding second address "100.200.123.45".

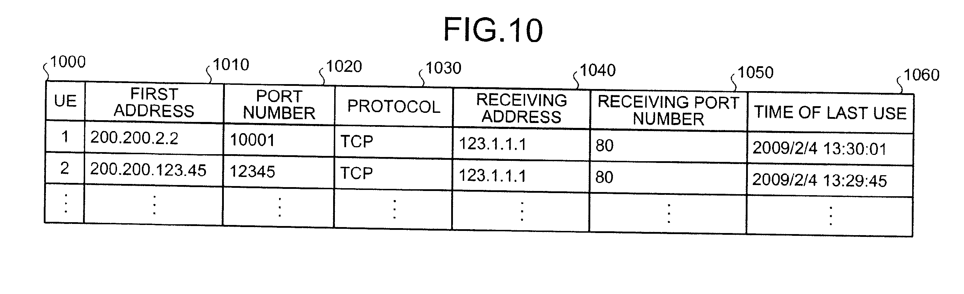

FIG. 10 depicts an example of session information stored by the communications apparatus. In the session information storage unit 813 depicted in FIG. 8, for example, a table 1000 depicted in FIG. 10 is stored as the session information indicating the session state. In the table 1000, a first address 1010, a port number 1020, a protocol 1030, a receiving address 1040, a receiving port number 1050, and a time of last use 1060 are correlated as session information, for each UE (1, 2, ...).

The port number 1020 indicates the port number that each UE uses. The protocol 1030 indicates the protocol that each UE uses (TCP, etc.). The receiving address 1040 indicates the address of a communication counterpart of each UE. The receiving port number 1050 indicates the port number used by the communication counterpart of each UE. The time of last use 1060 of the gateway device 132 by each UE is the time that the last packet transmitted or received by the UE passed through the gateway device 132.

When DL packets are output from the communications interface 811, the gateway device 132 searches the table 1000 for the session information that corresponds to the first address set as the destination of the output DL packets. If corresponding session information is retrieved, the gateway device 132 updates the time of last use 1060 of the session information.

When UL packets are transmitted from the macro base station 133, the gateway device 132 searches the table 1000 for session information that corresponds to the first address set as the transmission source of the transmitted UL packets. If corresponding session information is retrieved, the gateway device 132 updates the time of last use 1060 of the session information.

Further, the gateway device 132 monitors the time of last use 1060 in the table 1000 and deletes from the table 1000, session information that has not been updated for a given period (e.g., 1 hour). Configuration may be such that when the gateway device 132 detects completion of a session, based on the TCP header (FIN flag, etc.) of packets passing through the gateway device 132, the gateway device 132 deletes the corresponding session information from the table 1000.

### (Operator network operation)

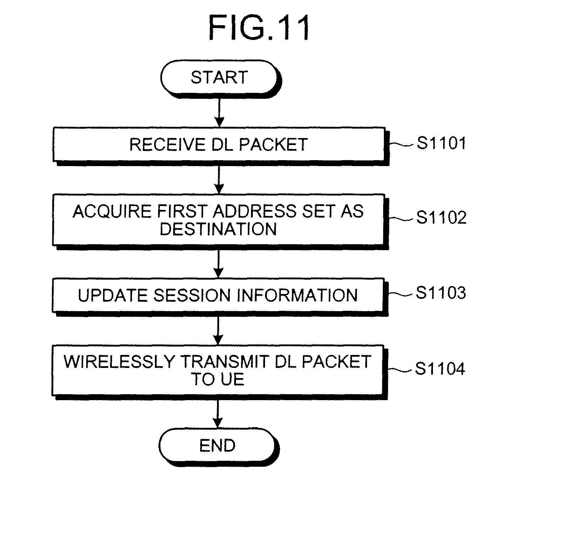

FIG. 11 is a flowchart of an example of operator network operation when DL packets are received. The communications interface 811 receives a DL packet that has been transferred from the femtocell 120 via the internet 101 and that has the first address set as a destination (step S1101). The gateway device 132 acquires the first address set as the destination of the DL packet received at step S1101 (step S1102).

The gateway device 132 updates the session information (time of last use 1060) that corresponds to the first address acquired at step S1102 (step S1103). The macro base station 133 wirelessly transmits to the UE 105, the DL packet received at step S1101 (step S1104), ending series of the operations.

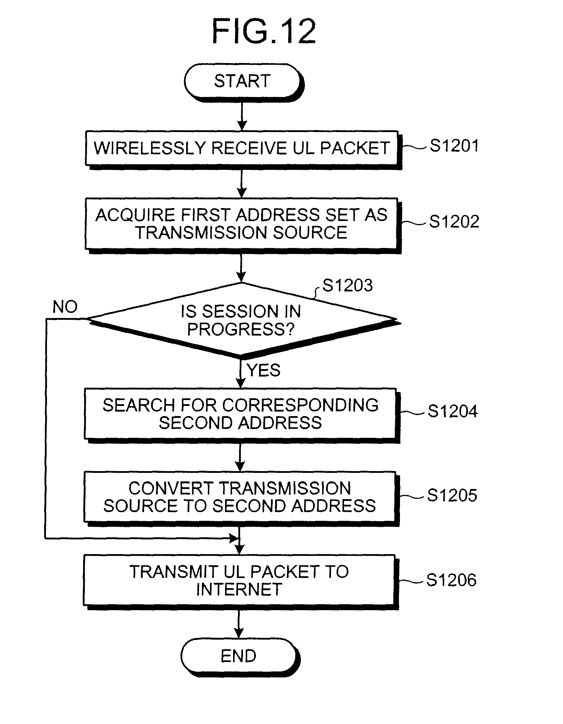

FIG. 12 is a flowchart of operator network when UL packets are received. The macro base station 133 wirelessly receives an UL packet that is wirelessly transmitted from the UE 105 and that has the first address set as the transmission source (step S1201). The gateway device 132 acquires the first address set as the transmission source of the UL packet received at step S1201 (step S1202).

The gateway device 132 refers to the session information stored in the session information storage unit 813 and determines whether the session corresponding to the first address acquired at step S1202 is in progress (step S1203). If the session is not in progress (step S1203: NO), the flow proceeds to step S1206.

If the session is in progress (step S1203: YES), the address converting device 131 searches the correspondence information stored in the correspondence information storage device 812, for the second address that corresponds to the first address acquired at step S1202 (step S1204).

The address converting device 131 converts the transmission source of the UL packet received at step S1201 to the second address retrieved at step S1204 (step S1205). The communications interface 811 transmits the UL packet to the web server 110 (step S1206), ending a series of operations.

### (Communications system operation)

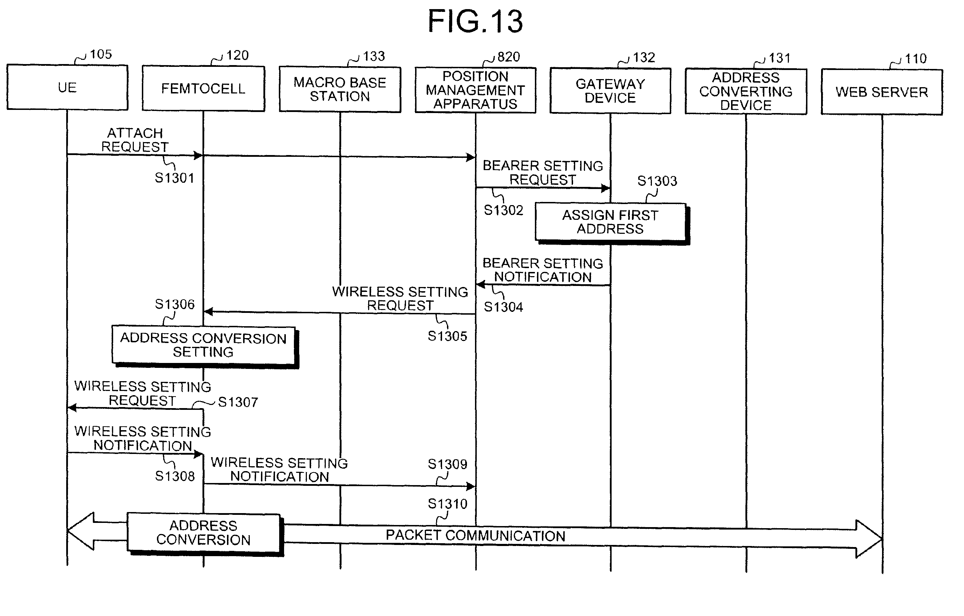

FIG. 13 is a sequence diagram of an example of an attach sequence of the communications system. In the communications system 100, if the UE 105 is in the cell of the femtocell 120, the following attach sequence is performed. The UE 105 transmits an attach request to the position management apparatus 820 via the femtocell 120 (step S1301).

The position management apparatus 820 transmits a bearer setting request to the gateway device 132 (step S1302). The gateway device 132 assigns a first address to the UE 105 (step S1303). The gateway device 132 transmits to the position management apparatus 820, bearer setting notification that includes the first address assigned at step S1303 (step S1304).

The position management apparatus 820 transmits to the femtocell 120, a wireless setting request that includes the first address included in the bearer setting notification transmitted at step S1304 (step S1305). The femtocell 120 performs address conversion setting of storing to the correspondence information storage device 812, correspondence information that correlates the first address included in the wireless setting request transmitted at step S1305 and the second address (step S1306).

The second address at step S1306 is the second address that the femtocell 120 assigned to the UE 105. The femtocell 120 transmits to the UE 105, a wireless setting request that includes the first address included in the wireless setting request transmitted at step S1305 (step S1307). The UE 105 sets, as the address of the UE 105, the first address included in the wireless setting request transmitted at step S1307.

The UE 105 transmits to the femtocell 120, wireless setting notification indicating that the wireless setting has been performed (step S1308). The femtocell 120 transmits to the position management apparatus 820, wireless setting notification indicating that the wireless setting has been performed (step S1309). The communication of packets between the UE 105 and the web server 110 commences by the relaying performed by the femtocell 120 (step S1310), ending the attach sequence.

In the packet communication commenced at step S1310, inter-conversion of the first address and the second address is performed by the femtocell 120. Further, in the packet communication commenced at step S1310, communication between the femtocell 120 and the web server 110 is performed bypassing the operator network 103, by the encapsulation and decapsulation performed by the gateway function unit 122 of the femtocell 120.

In this manner, the correspondence information storage device 330 of the femtocell 120 stores the first address notified by the operator network 103 when the UE 105 attaches to the cell of the femtocell 120.

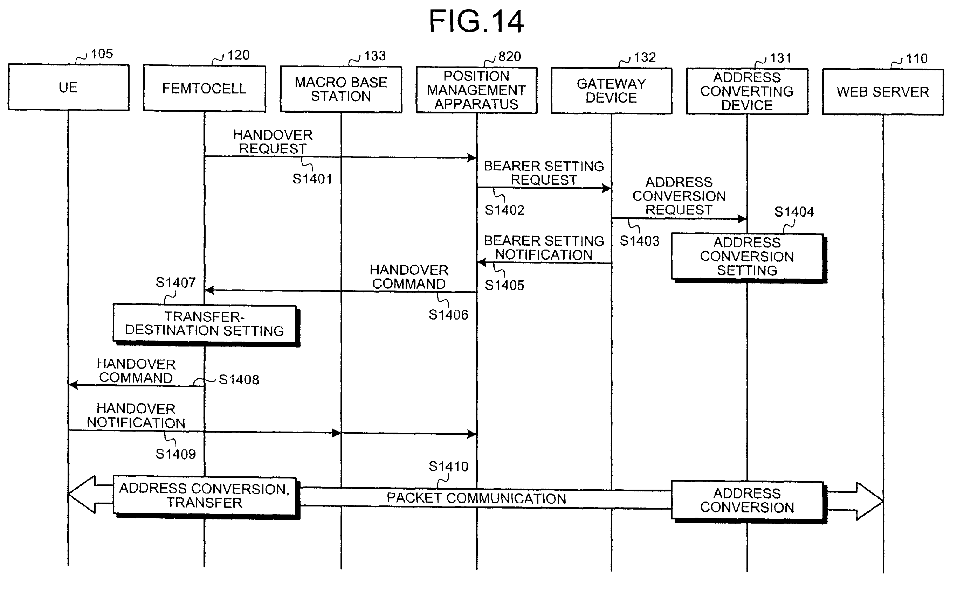

FIG. 14 is a sequence diagram of an example of a handover sequence of the communications system. In the communications system 100, the following handover sequence is performed when the UE 105 moves from the cell of the femtocell 120 to a cell of the macro base station 133. The femtocell 120 transmits to the position management apparatus 820, a handover request that includes the second address of the UE 105 (step S1401).

The position management apparatus 820 transmits to the gateway device 132, a bearer setting request that includes the second address included in the handover request transmitted at step S1401 (step S1402). The gateway device 132 transmits to the address converting device 131, an address conversion request that includes the first address and the second address included in the bearer setting request transmitted at step S1402 (step S1403).

The first address at step S1403 is the first address, which is assigned to the UE 105 at step S1303 depicted in FIG. 13. The address converting device 131 performs address conversion setting of storing to the correspondence information storage device 812, correspondence information that correlates the second address included in the address conversion request transmitted at step S1403 and the first address of the UE 105 (step S1404).

The gateway device 132 transmits to the position management apparatus 820, bearer setting notification that indicates that the bearer setting has been performed (step S1405). The position management apparatus 820 transmits to the femtocell 120, a handover command to execute handover (step S1406). The femtocell 120 performs transfer-destination setting of setting the in-cell flag of the UE 105, to "False" (step S1407).

The femtocell 120 transmits a handover command to the UE 105 (step S1408). The UE 105, based on the handover command transmitted at step S1408, performs handover from the femtocell 12 to the macro base station 133. The UE 105 transmits to the position management apparatus 820 via the macro base station 133, handover notification indicating that handover has been performed (step S1409).

Subsequently, communication between the UE 105 and the web server 110 commences (step S1410), ending the handover sequence. In the packet communication at step S1410, address conversion and transfer are performed with respect to DL packets, by the femtocell 120. Further, address conversion is performed with respect to UL packets, by the address converting device 131.

In this manner, if the UE 105 performs handover to the macro base station 133, the femtocell 120 includes a notifying unit (the eNodeB function unit 123) that notifies the operator network 103 of the second address assigned to the UE 105, whereby in the address converting device 131 on the operator network 103, the destination of UL packets from the UE 105 can be converted from the first address to the second address.

As described, according to the disclosed base station, communications apparatus, relay method, and communication method, packets communicated by the UE 105 that has performed handover from the cell of the femtocell 120 to the macro base station 133 can be transferred by subjecting the packets to address conversion.

As a result, if the web server 11 on the internet 1010 communicates with the UE 105, the second address is used as the address of the UE 105 and consequently, even if the UE 105 performs handover, communication can continue. Further, the UE 105 uses the first address as the address of the UE 105 and consequently, even if the UE 105 performs handover from cell of the femtocell 120 to the macro base station 133, communication can continue.

The transferring of packets by converting the address of the packets enables the amount of transfer packet information to be reduced. For example, unlike the transferring of packets by packet encapsulation by MIP, the amount of transfer packet information can be reduced since drastic increases in header information of transfer packets can be avoided.

In the operator network 103, if DL packets transferred from the femtocell 120 are received, the received DL packets can be wirelessly transmitted as is to the UE 105. Therefore, for example, processing such as that in MIP to decapsulate transfer-packets is unnecessary. Consequently, communication speed can be increased and processing load can be reduced.

In the embodiments, although description has been given for a UE 105 that communicates with a web server 110 on an internet 101, the communication counterpart of the UE 105 may any communications apparatus connected thereto via the internet 101.

## Claims

1. A base station that relays communication between a wide area communications network and a mobile terminal in a nearby wireless area, the base station comprising:
a storage device that stores therein correspondence information that correlates a first address and a second address that are assigned to the mobile terminal, the first address being assigned in a mobile communications network coupled to the wide area communications network and the second address being assigned in the wireless area;
a receiving unit that receives from the wide area communications network, a packet having the second address set as a destination;
a converting unit that based on the correspondence information, converts the destination of the received packet, from the second address to the first address; and
a transferring unit that transfers to the mobile communications network, the packet of which the destination has been converted, if the mobile terminal has performed handover to a second base station in the mobile communications network.

2. The base station according to claim 1, further comprising a wireless transmitting unit that wirelessly transmits to the mobile terminal, the packet of which the destination has been converted, if the mobile terminal is in the wireless area.

3. The base station according to claim 1, further comprising:
a wireless receiving unit that wirelessly receives from the mobile terminal, a packet having the first address as a transmission source;
a second converting unit that based on the correspondence information, converts the transmission source of the packet wirelessly received by the wireless receiving unit, from the first address to the second address; and
a transmitting unit that transmits to the wide area communications network, the packet of which the transmission source has been converted.

4. The base station according to claim 1, wherein the storage device stores the first address notified via the mobile communications network when the mobile terminal attaches to the wireless area.

5. The base station according to claim 1, further comprising a notifying unit that provides notification of the second address to the mobile communications network when the mobile terminal performs handover to the second base station.

6. The base station according to claim 1, wherein
the receiving unit stores the received packet to memory,
the converting unit is a computing unit that reads out the packet stored to the memory by the receiving unit, converts the destination of the read packet, and then stores the packet to the memory, and
the transferring unit reads out the packet stored to the memory by the converting unit and transfers the read packet.

7. A base station that relays communication between a wide area communications network and a mobile terminal in a
nearby wireless area, the base station comprising:
a storage device that stores therein correspondence information that correlates a first address and a second address that are assigned to the mobile terminal, the first address being assigned in a mobile communications network coupled to the wide area communications network and the second address being assigned in the wireless area;
a wireless receiving unit that wirelessly receives from the mobile terminal, a packet having the first address as a transmission source;
a converting unit that based on the correspondence information, converts the transmission source of the wirelessly received packet, from the first address to the second address; and
a transmitting unit that transmits to the wide area communications network, the packet of which the transmission source has been converted.

8. The base station according to claim 7, wherein
the wireless receiving unit stores the wirelessly received packet to memory,
the converting unit is a computing unit that reads out the packet stored to the memory by the wireless receiving unit, converts a destination of the read packet, and then stores the packet to the memory, and
the transmitting unit reads out the packet stored to the memory by the converting unit and transmits the read packet.

9. A communications apparatus that is on a mobile communications network and that relays communication between a wide area communications network and a mobile terminal that has performed handover to a base station in the mobile communications network, from a wireless area that is coupled to the wide area communications network, the communications apparatus comprising:
a storage device that stores therein correspondence information the correlates a first address and a second address that are assigned to the mobile terminal, the first address being assigned in the mobile communications network and the second address being assigned in the wireless area;
a receiving unit that receives from the base station, a packet that is wirelessly transmitted from the mobile terminal to the base station and that has the first address as a transmission source;
a converting unit that based on the correspondence information, converts the transmission source of the received packet, from the first address to the second address; and
a transmitting unit that transmits to the wide area communications network, the packet of which the transmission source has been converted.

10. A relay method of relaying communication between a wide area communications network and a mobile terminal in a wireless area, the relay method comprising:
storing correspondence information that correlates a first address and a second address that are assigned to the mobile terminal, the first address being assigned in a mobile communications network that is coupled to the wide area communications network and the second address being assigned in the wireless area;
receiving from the wide area communications network, a packet having the second address as a destination;
converting, based on the correspondence information, the destination of the received packet, from the second address to the first address; and
transferring to the mobile communications network, the packet of which the destination has been converted, if the mobile terminal has performed handover to another base station in the mobile communications network.

11. A relay method of relaying communication between a wide area communications network and a mobile terminal in a wireless area, the relay method comprising:
storing correspondence information that correlates a first address and a second address that are assigned to the mobile terminal, the first address being assigned in a mobile communications network that is coupled to the wide area communications network and the second address being assigned in the wireless area;
wirelessly receiving from the mobile terminal, a packet having the first address as a transmission source;
converting, based on the correspondence information, the transmission source of the wirelessly received packet, from the first address to the second address; and
transmitting to the wide area communications network, the packet of which the transmission source has been converted.

12. A communication method that is for a mobile communications network and is a method of relaying communication between a wide area communications network and a mobile terminal that has performed handover to a base station in the mobile communications network, from a wireless area that is coupled to the wide area communications network, the communication method comprising:
storing correspondence information that correlates a first address and a second address that are assigned to the mobile terminal, the first address being assigned in the mobile communications network and the second address being assigned in the wireless area;
wirelessly receiving from the mobile terminal, a packet having the first address as a transmission source;
converting, based on the correspondence information, the transmission source of the wirelessly received packet, from the first address to the second address; and
transmitting to the wide area communications network, the packet of which the transmission source has been converted.
